# EUROPEAN PATENT SPECIFICATION

(11) **EP 0 598 594 B1**
(45) Date of publication and mention of the grant of the patent: **02.02.2000**
(21) Application number: 93309143.1
(22) Date of filing: 16.11.1993
(51) Int. Cl.: G11B 21/08, G11B 7/085, G11B 5/55

(54) **Disk drive system controller**
Plattenantriebsteuersystem
Système de commande d'entraînement de disque

(30) Priority: 16.11.1992 KR 9221516
(43) Date of publication of application: 25.05.1994
(73) Proprietor: DAEWOO ELECTRONICS CO., LTD, Jung-Gu, Seoul 100-095 (KR)
(72) Inventor: Choi, Hyeontaek, Kangnam-ku, Seoul (KR); Seo, Ilhong, Kangnam-Ku, Seoul (KR); Chang, Wooseog, Kwanag-ku, Seoul (KR); Lee, Changhee, Buk-Ku Incheon (KR); Kim, Goonjin, Namdong-ku, Incheon (KR)
(74) Representative: Needle, Jacqueline

(56) References cited:
- EP-A- 0 378 331
- EP-A- 0 426 447
- EP-A- 0 461 915
- EP-A- 0 481 492
- EP-A- 0 565 155
- DE-A- 4 015 682
- US-A- 4 979 055
- PATENT ABSTRACTS OF JAPAN vol. 14, no. 274 (P-1061) 13 June 1990 & JP-A-02 079 274 (TOSHIBA CORP.) 19 March 1990
- IEEE INTERNATIONAL CONFERENCE ON FUZZY SYSTEMS, 12 March 1992, SAN DIEGO USA pages 989 - 997 JIA-YUSH YEN ET AL. 'SERVO CONTROLLER DESIGN FOR AN OPTICAL DISK DRIVE USING FUZZY CONTROL ALGORITHM'
- SPIE-THE INTERNATIONAL SOCIETY FOR OPTICAL ENGINEERING . ELECTRO-OPTIC COMPUTER PERIPHERALS TECHNOLOGY, vol.1816, 16 December 1992, HSINCHU, TAIWAN CHINA pages 43 - 49 HAN-WEN HSU ET AL. 'FUZZY CONTROL FOR HEAD POSITIONING OF DISK DRIVES'

## Description

The present invention relates to a method and apparatus for controlling an actuator of a disc drive apparatus.

A disk drive system controller has a sensor, such as the head of a disk drive system or the optical sensor of a pickup apparatus, for recording and reproducing data to and from a disk.

In general, a hard disk drive system, an opto-magnetic disk drive system, an optical disk drive system or a floppy disk drive system for recording and reproducing required data to and from a mass information storage media, such as a hard disk, an opto-magnetic disk, an optical disk or a floppy disk, is gradually being enhanced in its precision and functions with the advanced design techniques.

Such a disk drive system generally establishes tracks and sectors on a disk to efficiently manage data stored on it.

That is, a disk drive system records or reproduces data stored on the tracks and sectors established on a disk by a head mounted in it. A positioning control is performed by a microcontroller in order for the head to move to a target track (track seeking operation) and to exactly follow the target track (track following operation).

In the track seeking operation, a locus for the movement control of the head is calculated in advance by a velocity profile method for the proximate optimal time. And also, during the head movement, the track seeking operation is performed by controlling the head position based on a velocity error which is a difference between a calculated head velocity and a predetermined velocity profile.

One of such prior art is disclosed in U.S. Patent No. 4,979,055 granted to John P. Squires era., entitled " Disk Drive System Controller architecture utilizing embedded real-time diagnostic monitor "

The disk drive system controller disclosed in U.S. Patent No. 4,979,055 provides for the storage and retrieval of data with respect to a rotating media and transfer of data with respect to a host in response to host commands, wherein the data is read and written by a sensor with respect to the rotating media, comprising a microcontroller and a memory containing a control program including a sensor positioning control process executed by the microcontroller.

In the disclosed controller, the control algorithm used for the control of the sensor is as follows.$\begin{matrix}\begin{matrix}{\text{O=K}}_{\text{Tgain}} {\text{(P}}_{\text{o}} {\text{-j}}_{\text{x}} {\text{P}}_{\text{-1}} {\text{)+I}}_{\text{t}} \\ {\text{O}}_{\text{S}} {\text{=K}}_{\text{Sgain}} {\text{(S}}_{\text{schd}} {\text{- (Save + S}}_{\text{ff}} {\text{)) + I}}_{\text{t}}\end{matrix}\end{matrix}$ where,
- K_{Tgain}: : a predetermined gain constant,
- Pₒ: : the off-track error of a current sector with respect to the sensor
- P₋₁: : the off-track error of a previous sector with respect to the sensor
- jₓ: : a constant (o < jₓ < 1)
- Iₜ: : predetermined initialization data value
- K_{sgain}: : a seek gain constant
- S_{schd}: : the scheduled Velocity
- Sₐᵥₑ: : average of the calculated actual velocity of the sensor and the predicted velocity for a next sector
- S_{ff}: : the product of a gain constant times s_{schd}

In the control by means of the disclosed algorithm, the control input in a head acceleration portion is different from that in a head deceleration portion.

That is, a velocity error between a velocity profile and an actual head velocity is used as the control input in the head acceleration portion, whereas an addition velocity of the error velocity and an actual head velocity is used as the control input in the head deceleration portion.

The agitation, such as pressure caused by FPCB (Flexible Printed Circuit board) or an air flow, acting evenly on the head at every track is calculated in advance at every track just after an application of power to a disk drive system and considered to be compensated in a separate manner for the control input when performing a track seeking operation.

Namely, a head velocity must be coincident with a given velocity profile in a velocity profile control method.

However, in the head position control by the disclosed algorithm, an actual head velocity will exceed a given velocity profile by acceleration and imperfection of an acceleration/deceleration commutation method for preventing an abrupt variation of current in case that there is a change from a head acceleration portion to a head deceleration portion.

In this known system there is a problem in that overshooting occurs since a head fails to exactly follow a velocity profile until it reaches to a target track.

There is another problem in that a long transient response time exists since a head reaches to a target track without time for lessening the velocity error when the head travels to its adjacent track.

There is still another problem in that two or three velocity profiles must be used according to the number of tracks for a head to be travelled.

JP-A-2079274 describes a method of controlling an actuator of a disk drive apparatus, wherein, in response to control signals, an actuator controller is arranged to move said actuator to seek a selected disk track and to position a actuator head thereof relative to said selected disk track, and wherein said controller is arranged to accelerate and then decelerate said actuator.

EP-A-0481492 relates to feedback control of a variable in general. After having approached the target value to within a settling range, fuzzy control is added so as to prevent overshoot.

The present invention extends to a method of controlling an actuator as defined above, characterised in that during deceleration of said actuator said method comprises the steps of determining the control signals applied to said actuator controller during deceleration such that said actuator substantially follows a desired velocity profile, and in that said control signals are determined in dependence upon a predetermined deceleration constant, the actual velocity of the actuator, and a value determined by Fuzzy rules in dependence upon the difference between the desired velocity of the profile and the actual velocity of the actuator, fuzzy rules not being applied during acceleration

A disk drive system controlled by a method of the invention enables its sensor, such as the head of a disk drive system or the optical sensor of a pickup apparatus for recording and reproducing data to and from a disk, to exactly follow a velocity profile by means of Fuzzy rules and compensation constants in a deceleration portion, thereby to reduce the track seeking time by minimizing overshoot at a target track.

The present invention also extends to disk drive system controller comprising a microcontroller; a data recording/reproducing apparatus having a sensor for recording and reproducing data to and from a disk; an actuator; the microcontroller being arranged to control the actuator; and a memory containing a control program including head positioning control processes executed by the microcontroller; wherein said control program incorporates control processes for causing the actuator to undertake a track seeking operation and a track following operation, the controller being characterised in that said track seeking operation is executed according to: 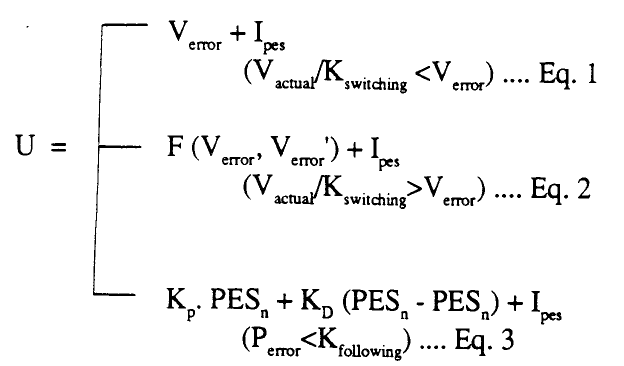 $\begin{matrix}\begin{matrix}\begin{matrix}{\text{V}}_{\text{error}} {\text{= Vprof - V}}_{\text{actual}}\end{matrix} \\ \begin{matrix}{\text{V}}_{\text{actual}} {\text{=(V}}_{\text{cal}} {\text{+ V}}_{\text{pred}} \text{)/2}\end{matrix} \\ \begin{matrix}{\text{V}}_{\text{pred}} {\text{=V}}_{\text{cal}} {\text{+ K}}_{\text{pred}} {\text{·V}}_{\text{cal}}\end{matrix} \\ \begin{matrix}{\text{F(V}}_{\text{error}} {\text{, V}}_{\text{error}} {\text{')=-V}}_{\text{actual}} {\text{+ K}}_{\text{decel}} {\text{+ f (V}}_{\text{error}} {\text{, V}}_{\text{error}} \text{')}\end{matrix}\end{matrix}\end{matrix}$ 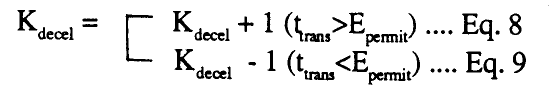 Where,
- Vₑᵣᵣₒᵣ: : a velocity error of a head,
- Vₑᵣᵣₒᵣ': : a derivative value of a velocity error
- V_{prof}: : a head velocity at a given current track
- V_{actual}: : a head velocity which a calculation time delay is compensated
- PESₙ: : a position error signal notifying of the off-track error of a head from a track.
- Iₚₑₛ: : an integral value of PESn
- K_{switching}: : an acceleration/deceleration communtation constant
- F(Vₑᵣᵣₒᵣ, Vₑᵣᵣₒᵣ'): : a fuzzy function
- Kₚ: : a proportional gain constant
- K_{D}: : a derivative gain constant
- Pₑᵣᵣₒᵣ: : the number of remaining track to be travelled
- K_{following}: : a communtation constant from a track seeking operation to a track following operation
- V_{cal}: : a head velocity calculated by a difference between the number of for tracks to be travelled at present and the number of tracks to have been travelled at a previous sampling time
- V_{pred}: : a predicted velocity of a next sampling time
- K_{pred}: : a constant obtained from a trial-and-error method
- K_{decel}: : a compensation constant
- tₜᵣₐₙₛ: : a transient response time
- Eₚₑᵣₘᵢₜ: : a predetermined transient response time.

A head is accelerated and decelerated according to Eq. 1 and Eq. 2 of the above control algorithm, and the controller determines that the head has reached to a target track in case that the Pₑᵣᵣₒᵣ is smaller than the commutation constant K_{following}, and the controller has the head to follow the current track by means of the PID control (Proportional Integral/Differential control) according to the algorithm as shown in Eq. 3.

Since the commutation from head acceleration to head deceleration is performed by comparing V_{actual}/K_{switching} with a velocity error Vₑᵣᵣₒᵣ in every sampling, it has no relation to the number of tracks. The acceleration/deceleration commutation constant K_{switching} is determined in a trial-and-error manner in order for a variation of a current to be minimized.

By the head deceleration according to the control algorithm Eq. 2, an actual head velocity V_{actual} becomes coincident with a given head velocity V_{prof}.

Accordingly, a control input for the head velocity decreases to zero in the track following portion which is a next control portion.

In case of controlling an error compensation valve by a velocity error Vₑᵣᵣₒᵣ alone as in accelerating a head, a control input becomes small. Therefore, an actual head velocity fails to exactly follow a given velocity profile V_{prof} and fluctuates around the given velocity profile V_{prof}. This means that the actual head velocity V_{actual} has to follow the given velocity profile V_{prof} in a deceleration portion rather than follow the entire given velocity profile V_{prof} .

Since this is a matter on whether more or less deceleration is required to the head, deceleration has to be considered as a factor to control the head.

As a result, a control input in a track following portion increases due to the foregoing matter.

Accordingly, Fuzzy rules, which reduce a velocity error and fluctuation, are applied.

Eq. 7 in the control algorithm, which describes Eq. 2 in detail, determines a control input in terms of-V_{actual}, a compensation constant K_{decel} and a fuzzy function f (Vₑᵣᵣₒᵣ, Vₑᵣᵣₒᵣ').

In case of applying a large control input for a fast reduction of the velocity error Vₑᵣᵣₒᵣ, in order to make an actual head velocity V_{actual} to exactly follow a given head velocity profile V_{prof} without fluctuation of the head velocity by preventing an occurrence of a velocity error Vₑᵣᵣₒᵣ in an opposite sign caused when the actual head velocity V_{actual} exceeds the given head velocity profile V_{prof}, the fuzzy function in Eq. 7 empolys a derivative value Vₑᵣᵣₒᵣ' of the velocity error Vₑᵣᵣₒᵣ that notifies of the velocity error Vₑᵣᵣₒᵣ and the changed state of the velocity error Vₑᵣᵣₒᵣ.

Language variables of the velocity error Vₑᵣᵣₒᵣ and its derivatie value Vₑᵣᵣₒᵣ' are respectively defined in terms of language values, that is, PB (positve big), PM (positive medium), PS (positive small), Z (zero), NS (negative small), NM (negative medium), NB (negative big), which constitute 49 rules.

The fuzzy rules are constructed with a trial-and-error method and experiences obtained from phenomena occurred in conventional control methods.

A look-up table is formed by inferring the possible cases according to the constructed Fuzzy rules.

On performing an actual control, a control input is determined with reference to the look-up table in accordance with a velocity error Vₑᵣᵣₒᵣ and its derivative value Vₑᵣᵣₒᵣ'.

Since the control input by means of the Fuzzy rules to controls an actual head velocity by predicting a velocity error Vₑᵣᵣₒᵣ, the actual head velocity can follow a given velocity profile V_{prof} exactly in a less head velocity fluctuation.

And also, without using any separate velocity profile in order to prevent variation of transient response time in accordance with a change of the number of tracks to be travelled, a constant response appears at any number of tracks to be travelled by compensating for a control input in a deceleration control portion of the head using a compensation constant K_{decel} calculated by Eq. 8 and Eq. 9 according to the number of tracks to be travelled.

Since the method for determining a compensation constant is constructed together with Fuzzy rules, a rising time lengthened by a critical damping to appear when using the Fuzzy rules can be improved.

As described above, by means of Fuzzy rules and compensation constants, the head of a disk drive system can exactly follow a velocity profile in a deceleration portion, thereby reducing the track seeking time by minimizing overshoot at a target track.

Embodiments of the present invention will hereinafter be described, by way of example, with reference to the accompanying drawings, in which:-
Fig. 1 is a schematic block diagram of a general disk drive system controller,
Fig. 2 is a graph showing a method for determining a velocity profile,
Fig. 3 shows a chart of Fuzzy rules in language variables,
Fig. 4 shows a look-up table according to the Fuzzy rules of Fig. 3, and
Fig. 5 is a block diagram of a control algorithm.

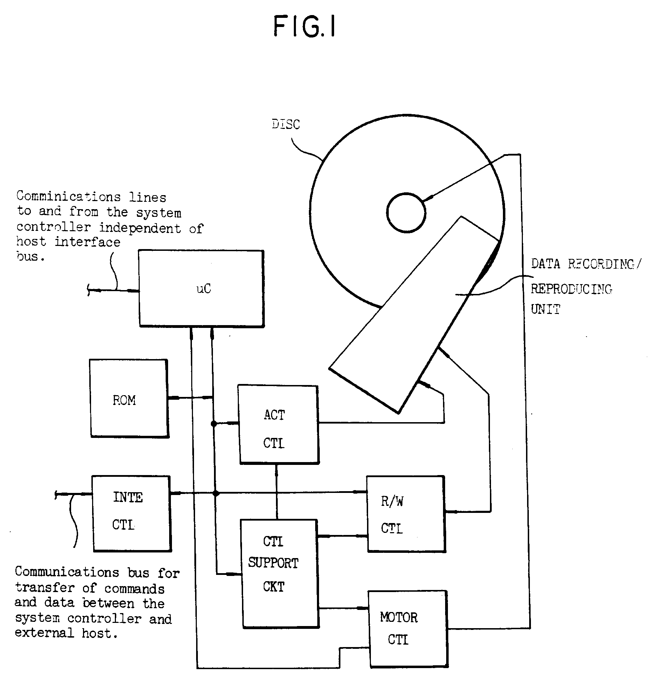

Fig. 1 shows a schematic block diagram of a general disk system controller as illustrated and described in US 4,979,055. The general arrangement of the disk system controller of the present invention may be as described in the above identified US Patent, and the description in US Patent No. 4,979,055 is specifically included herein by reference.

The disk drive system controller comprises a controller (µc), an actuator assembly having an actuator, an arm and a head; and an actuator assembly controller (ACT CTL) connected to the microcontroller (µc) for controlling the actuator assembly. A memory (ROM) containing a control program is provided and includes head positioning control process for execution by the microcontroller. The memory is arranged to contain a control program which includes a head positioning control process according to the control algorithm as follows: 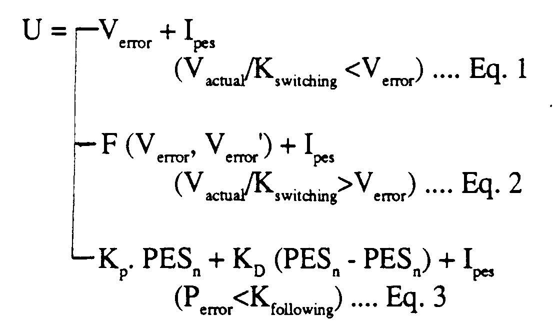 $\begin{matrix}\begin{matrix}\begin{matrix}{\text{V}}_{\text{error}} {\text{= V}}_{\text{prof}} {\text{- V}}_{\text{actual}}\end{matrix} \\ \begin{matrix}{\text{V}}_{\text{actual}} {\text{= (V}}_{\text{cal}} {\text{+ V}}_{\text{pred}} \text{)/2}\end{matrix} \\ \begin{matrix}{\text{V}}_{\text{pred}} {\text{= V}}_{\text{cal}} {\text{+ K}}_{\text{pred}} {\text{·V}}_{\text{cal}}\end{matrix} \\ \begin{matrix}{\text{F (V}}_{\text{error}} {\text{, V}}_{\text{error}} {\text{') = -V}}_{\text{actual}} {\text{+ K}}_{\text{decel}} {\text{+ f(V}}_{\text{error}} {\text{, V}}_{\text{error}} \text{')}\end{matrix}\end{matrix}\end{matrix}$ 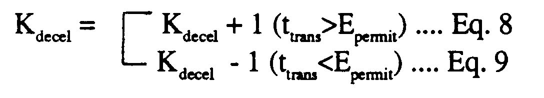 Where,
- Vₑᵣᵣₒᵣ: : a velocity error of a head,
- Vₑᵣᵣₒᵣ': : a derivative value of a velocity error
- V_{prof}: : a head velocity at a given current track
- V_{actual}: : a head velocity which a calculation time delay is compensated
- PESₙ: : a position error signal notifying of the off-track error of a head from a track.
- Iₚₑₛ: : an integral value of PESn
- K_{switching}: : an acceleration/deceleration communtation constant
- F(Vₑᵣᵣₒᵣ, Vₑᵣᵣₒᵣ'): : a fuzzy function
- Kₚ: : a proportional gain constant
- K_{D}: : a derivative gain constant
- Pₑᵣᵣₒᵣ: : the number of track to be travelled
- K_{following}: : a communtation constant from a track seeking operation to a track following operation
- V _{cal}: : a head velocity calculated by a difference between the number of tracks to be travelled at the present time and the number of tracks to have been travelled at a previous sampling time
- V_{pred}: : a predicted velocity of a next sampling time
- K_{pred}: : a constant obtained from a trial-and-error method
- K_{decel}: : a compensation constant
- tₜᵣₐₙₛ: : a transient response time
- Eₚₑᵣₘᵢₜ: : a predetermined transient response time.

An integral value of PESₙ Ipes, is too small to exert influence on a control input in a track seeking operation, but the value is a predominent control input for lessening a velocity error Vₑᵣᵣₒᵣ in a track following operation, that is, in the normal state in the PID control.

A velocity profile V_{prof} plays a dominant role in determining a performance of a disk drive controller system.

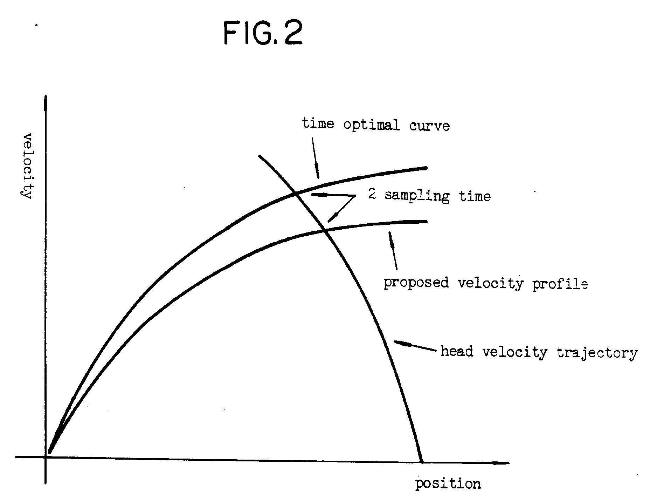

As shown in Fig. 2, since overshoot occurs when a head velocity exceeds a proximate-optimal time curve, that is, a given velocity profile, the slope of a velocity profile is determined to be low for switching as earlier as the changed velocity difference during the time period of two sampling in a maximum acceleration of a head on the basis of the proximate-optimal time curve. The reason of the two sampling time period is established for preventing a head velocity from being switched over the proximate-optimal time curve by a sampling time delay and to keep the head velocity steady against an external disturbance.

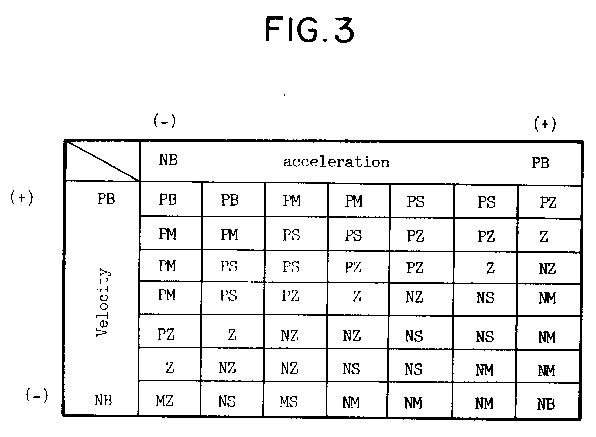

A head is accelerated and decelerated according to Eq. 1 and Eq. 2 of the above control algorithm, and the controller determines whether the head has reached to a target track in case that the number of track to be travelled Pₑᵣᵣₒᵣ is smaller than the commutation constant K_{following}, and the controller has the head to follow the current track by means of the PID control (Proportional Integral/Differential Control) according to the algorithm as shown in Fig. 3.

The head is accelerated with the highest acceleration or linearly by using a velocity error Vₑᵣᵣₒᵣ as a control input according to Eq. 1.

When a head is to travel a number of tracks. the head is accelerated to the highest acceleration, but an abrupt change of current does not occur as in the proximate-optimal time control since the magnitude of acceleration gets smaller when the velocity error Vₑᵣᵣₒᵣ becomes smaller.

The commutation from head acceleration to head deceleration is performed by comparing V_{actual}/K_{following} with a velocity error Vₑᵣᵣₒᵣ.

In case there are a number of tracks for a head to be travelled, since the head reaches to a velocity profile at a very high speed due to a long acceleration time, the shorter timing of commutation to deceleration is required than that of a few tracks.

Otherwise, the head velocity continues to increase, so that the head velocity exceeds a velocity profile due to acceleration.

In this case, it is difficult to decelerate the head as well as to avoid an abrupt current change.

However, the commutation in the proposed commutation method is not implemented by comparison of a specific reference with an actual head velocity Vₐₜᵤₐₗ or a velocity error Vₑᵣᵣₒᵣ or the number of track Pₑᵣᵣₒᵣ, but by comparison of V_{actual}/K_{switching} with a velocity error Vₑᵣᵣₒᵣ, the commutation reference varies in proportion to an actual head velocity.

Therefore, the actual head velocity can be used as a commutation reference regardless of the number of tracks for the head to be travelled.

In fact, since the commutation is accomplished before a head velocity reaches up to a velocity profile, the head is not immediately decelerated due to a small quantity of the velocity error remained, but kept with a small quantity of acceleration which is not decelerated yet.

Since the head starts to be decelerated when a velocity error Vₑᵣᵣₒᵣ in an opposite sign appears just after a head velocity reaches to a velocity profile, a smooth commutation from acceleration to deceleration can be obtained.

At this point, the commutation constant K_{following} are to be chosen in a trial-and -error method in order to make the variation of current minimized.

The seeking time becomes longer when the timing of the commutation becomes shorter. If the timing of the commutation gets later, a sudden variation of the current appears.

The head deceleration is controlled to be on the line of a velocity profile V_{prof} according to Eq. 2. The object of the head deceleration according to Eg. 2 is to reduce the control for the head input in a track following portion to zero.

In case of controlling an error compensation value by a velocity error Vₑᵣᵣₒᵣ alone as in accelerating a head, a control input becomes smaller. Therefore, an actual head velocity fails to exactly follow a given head velocity-profile V_{prof} and fluctuates around the given velocity-profile V_{prof}. This is a problem occurred since the actual head velocity V_{actual} has to follow the given velocity-profile V_{prof} in a deceleration state rather than follow the given velocity-profile V_{prof}. Even though the sign of a velocity error Vₑᵣᵣₒᵣ changes, the sign of a control input does not change, and its magnitude changes.

Since this is a matter on whether more or less deceleration is required to the head, deceleration has to be considered as a factor to control the head.

As a result, a control input in a track following portion increases due to the foregoing matter, so that overshoot is caused.

Accordingly, Fuzzy rules, which reduces a velocity error and fluctuation, are applied.

Eq. 7 in the control algorithm, which describes Eq. 2 in detail, determines a control input in terms of - V_{actual}, a compensation constant K_{decel} which will be described later and a fuzzy function f(Vₑᵣᵣₒᵣ, Vₑᵣᵣₒᵣ').

In case of applying a large control input for a fast reduction of the velocity error Vₑᵣᵣₒᵣ, in order to make the actual head velocity V_{actual} exactly follow the given velocity profile V_{prof} without fluctuation of the head velocity with preventing an occurrence of a velocity error Vₑᵣᵣₒᵣ in an opposite sign caused when the actual head velocity V_{actual} exceeds the given velocity profile V_{prof}, the fuzzy function in Eq. 7 employs a derivative value Vₑᵣᵣₒᵣ' of the velocity error Vₑᵣᵣₒᵣ that notifies of the velocity error Vₑᵣᵣₒᵣ and the changed state of the velocity error Vₑᵣᵣₒᵣ.

Language variables of the velocity error Vₑᵣᵣₒᵣ and its derivative value Vₑᵣᵣₒᵣ' are respectively defined in terms of language values, that is, PB (positive big), PM (positive medium), PS (positive small), Z (zero), NS (negative small), NM (negative medium), NB (negative big), which constitute 49 rules as shown in Fig. 3.

The Fuzzy rules are constructed with a trial-and-error method and experiences obtained from phenomena occurred in conventional control methods.

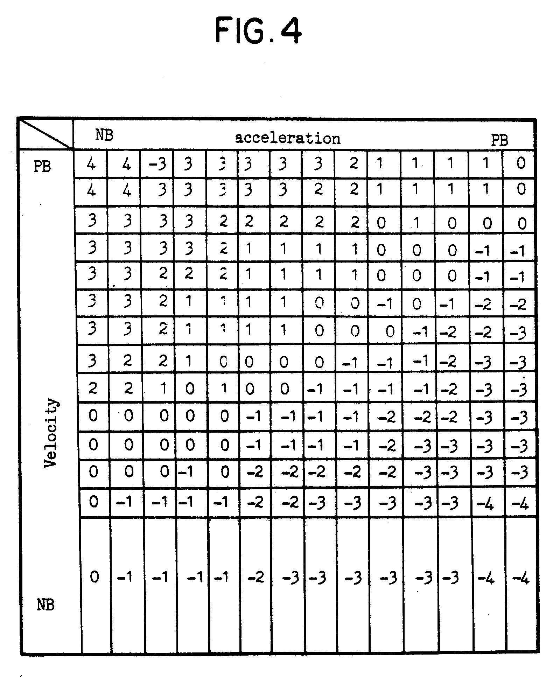

A look-up table, as shown in Fig. 4, is formed by inferring the possible cases according to the constructed Fuzzy rules.

On performing an actual control, a control input is determined with reference to the look-up table in accordance with a velocity error Vₑᵣᵣₒᵣ and its derivative value Vₑᵣᵣₒᵣ'.

Since the control input by means of the Fuzzy rules controls an actual head velocity by predicting a velocity error Vₑᵣᵣₒᵣ, the actual head velocity can follow a given velocity profile V_{prof} exactly in a less head velocity fluctuation.

And also, without using any seperate velocity profile in order to prevent variation of transient response time in accordance with a change of the number of tracks to be travelled, a constant response appears at any number of tracks to be travelled by compensating for a control input in a deceleration control portion of the head using compensation constant K_{decel} calculated by Eq. 8 and Eq. 9 according to the number of travelled tracks to be travelled.

Since the method for compensation constant is constructed together with Fuzzy rules, a rising time lengthened by a critical damping to appear when using the Fuzzy rules can be improved.

Eq. 8 and Eq. 9 are applied for determining a compensation constant K_{decel}. The compensation constant K_{decel} satisfying a predetermined transient response time Eₚₑᵣₘᵢₜ at every number of tracks to be travelled is determined in an off-line manner, and compensates for a control input when a head travels tracks.

where, tₜᵣₐₙₛ denotes a transient response time.

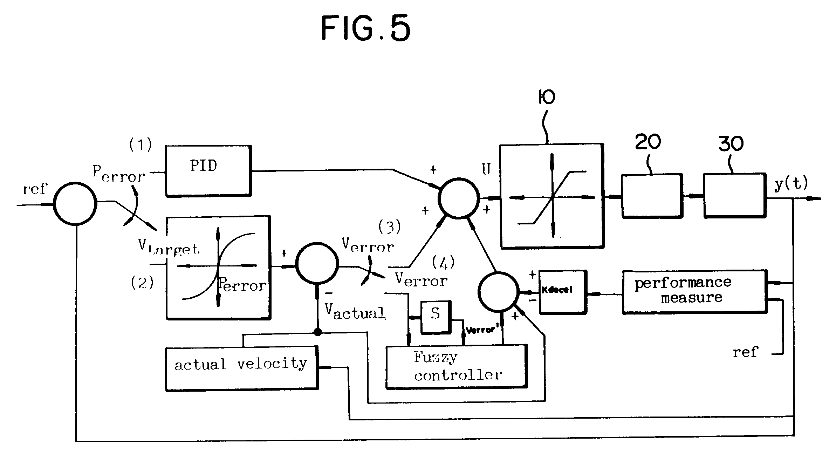

Fig. 5 shows a block diagram of control algorithm. A reference numeral ref is a track movement command which is to be given as a target track number. The Pₑᵣᵣₒᵣ is determined by the number of track to be travelled on the basis of a current track number.

The track seeking operation, reference numeral (3) in Fig. 5, is constructed with a head acceleration process and a head deceleration process, reference numeral (4) in Fig. 5.

An actual head velocity, an output value of Fuzzy rules and a compensation constant are generated as a control input.

When a head reaches to a target track, the number of tracks to be travelled Pₑᵣᵣₒᵣ becomes smaller, and a commutation is performed from a track seeking operation in reference numeral (2) of Fig. 5 to a track following operation in reference numeral (1) of Fig. 5.

A commutation constant K_{following} is used as a commutation reference and the commutation is made by comparison of the number of tracks to be travelled Pₑᵣᵣₒᵣ with the commutation constant K_{following}.

The track following operation is accomplished by the PID control in reference numeral (2) of Fig. 5.

As described above, by means of Fuzzy rules and compensation constants, the head of a disk drive system can exactly follow a velocity profile in a deceleration portion, so that the track seeking time can be reduced with minimizing overshoot at a target track.

## Claims

1. A method of controlling a actuator of a disk drive apparatus, wherein, in response to control signals, a actuator controller is arranged to move said actuator to seek a selected disk track and to position an actuator head thereof relative to said selected disk track, ad wherein said controller is arranged to accelerate and then decelerate said actuator, the method being characterised in that during deceleration of said actuator said method comprises the steps of determining the control signals applied to said actuator controller during deceleration such that said actuator substantially follows a desired velocity profile, and in that said control signals are determined in dependence upon a predetermined deceleration constant, the actual velocity of the actuator, ad a value determined by Fuzzy rules in dependence upon the difference between the desired velocity of the profile and the actual velocity of the actuator, fuzzy rules not being applied during acceleration.

2. A method as claimed in Claim 1, wherein a look-up table constructed in accordance with Fuzzy rules is provided, and said value determined by Fuzzy rules is determined by inputting said difference between the desired and actual velocities, and the derivative of said differences, to said look-up table.

3. A method as claimed in Claim 1 or Claim 2, wherein said predetermined deceleration constant is selected in dependence upon the number of tracks to be travelled by said actuator.

4. A method as claimed in any preceding claim, further comprising the step of causing said controller to switch from acceleration to deceleration of the actuator if it is determined that the difference between the desired velocity of the profile and the actual velocity of the actuator is substantially equal to the value of the actual velocity divided by a predetermined commutation constant.

5. Apparatus for controlling an actuator of a disk drive utilising the control method as claimed in any preceding claim, said apparatus comprising an actuator controller arranged to move said actuator to seek a selected disk track and to position an actuator head thereof relative to said disk track, and programmable control means programmed for determining and generating the control signals according to the method as defined in any of the preceding claims and for applying them to said actuator controller to cause track seeking movement of said actuator.

6. A disk drive system controller comprising a microcontroller; a data recording/reproducing apparatus having a sensor for recording and reproducing data to and from a disk; an actuator; the microcontroller being arranged to control the actuator; and a memory containing a control program including head positioning control processes executed by the microcontroller; wherein said control program incorporates control processes for causing the actuator to undertake a track seeking operation and a track following operation, the controller being characterised in that said track seeking operation is executed according to:
a) in an acceleration portion,$\begin{matrix}\begin{matrix}{\text{U = V}}_{\text{error}} {\text{+ I}}_{\text{pes}} \\ {\text{(V}}_{\text{actual}} {\text{/K}}_{\text{switching}} {\text{< V}}_{\text{error}} \text{)}\end{matrix}\end{matrix}$
b) in a deceleration portion,${\text{U = f(V}}_{\text{error}} {\text{, V}}_{\text{error}} {\text{') - V}}_{\text{actual}} {\text{+ K}}_{\text{decel}}$ 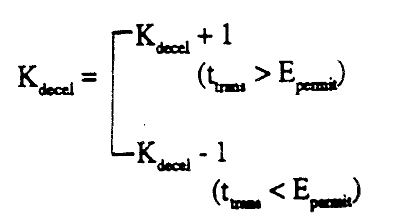
c) said track following operation is executed according to:$\begin{matrix}\begin{matrix}{\text{U = K}}_{\text{p}} {\text{.PES}}_{\text{n}} {\text{+ K}}_{\text{D}} {\text{. (PES}}_{\text{n-1}} {\text{- PES}}_{\text{n}} {\text{) + I}}_{\text{pes}} \\ {\text{(P}}_{\text{error}} {\text{< K}}_{\text{following}} \text{)}\end{matrix}\end{matrix}$ Where,
Vₑᵣᵣₒᵣ : a velocity error of the head, Vₑᵣᵣₒᵣ': a derivative value of a velocity error, V_{prof}: a head velocity at a given current track, V_{actual}: a head velocity which a calculation time delay is compensated, PESₙ: a position error signal notifying of the off-track error of a head from a track, Iₚₑₛ: an integral value of PESₙ, K_{switching}: an acceleration/deceleration communtation constant, F(Vₑᵣᵣₒᵣ, Vₑᵣᵣₒᵣ'): a fuzzy function, Kₚ; a proportional gain constant, K_{D}: a derivative gain constant, Pₑᵣᵣₒᵣ: the number of track to be travelled, K_{following}: a communtation constant from a track seeking operation to track following operation, V_{cal}: a head velocity calculated by a difference between the number for tracks to be travelled at present and the number of tracks to have been travelled at a previous sampling time, V_{pred}: a predicted velocity of a next sampling time, K_{pred}: a constant obtained from a trial-and-error method, K_{decel}: a compensation constant, tₜᵣₐₙₛ: a transient response time, Eₚₑᵣₘᵢₜ: a predetermined transient response time.

7. A disk drive system controller as claimed in claim 6, wherein said data recording/reproducing apparatus is an actuator assembly constituted with an actuator, an arm and a head.

8. A disk drive system controller as claimed in claim 6, wherein said data recording/reproducing apparatus is a pickup apparatus having at least one travelling unit and at least one optical sensor.

## Patentansprüche

1. Verfahren zum Steuern eines Betätigungselements einer Scheibenlaufwerkvorrichtung, bei welchem in Reaktion auf Steuersignale eine Betätigungselement-Steuerung so ausgebildet ist, daß sie das Betätigungselement so bewegt, daß es eine ausgewählte Scheibenspur sucht und einen Betätigungselementkopf desselben in bezug auf die gewählte Scheibenspur anordnet, und wobei die Steuerung so ausgebildet ist, daß sie das Betätigungselement beschleunigt und dann verzögert, wobei das Verfahren dadurch gekennzeichnet ist, daß während der Verzögerung des Betätigungselements das Verfahren die folgenden Schritte aufweist: Feststellen der Steuersignale, die an die Betätigungselement-Steuerung während der Verzögerung angelegt werden, dergestalt, daß das Betätigungselement im wesentlichen einem gewünschten Geschwindigkeitsprofil folgt, und daß die Steuersignale in Abhängigkeit einer vorbestimmten Verzögerungskonstanten, der tatsächlichen Geschwindigkeit des Betätigungselements und eines Werts, bestimmt durch Fuzzy-Regeln in Abhängigkeit des Unterschieds zwischen der gewünschten Geschwindigkeit des Profils und der tatsächlichen Geschwindigkeit des Betätigungselements, bestimmt werden, wobei die Fuzzy-Regeln nicht während der Beschleunigung angewandt werden.

2. Verfahren nach Anspruch 1, wobei eine Tabelle, welche gemäß Fuzzy-Regeln konstruiert ist, vorgesehen ist, und der durch Fuzzy-Regeln festgestellte Wert durch Eingeben des Unterschieds zwischen der gewünschten und tatsächlichen Geschwindigkeit und der Ableitung der Unterschiede in die Tabelle festgestellt wird.

3. Verfahren nach Anspruch 1 oder 2, wobei die vorbestimmte Verzögerungskonstante in Abhängigkeit von der Anzahl der von dem Betätigungselement zu durchlaufenden Spuren ausgewählt wird.

4. Verfahren nach einem der vorhergehenden Ansprüche, welches weiterhin den Schritt des Bewirkens beinhaltet, daß die Steuerung von einer Beschleunigung zu einer Verzögerung des Betätigungselements schaltet, wenn festgestellt wird, daß der Unterschied zwischen der gewünschten Geschwindigkeit des Profils und der tatsächlichen Geschwindigkeit des Betätigungselements im wesentlichen gleich dem Wert der tatsächlichen Geschwindigkeit geteilt durch eine vorbestimmte Kommutationskonstante ist.

5. Vorrichtung zum Steuern eines Betätigungselements eines Scheibenlaufwerks, welche das nach einem der vorhergehenden Ansprüche beanspruchte Steuerverfahren verwendet, wobei die Vorrichtung eine Betätigungselement-Steuervorrichtung, die so ausgebildet ist, daß sie das Betätigungselement dergestalt bewegt, daß es eine gewählte Scheibenspur sucht und einen Betätigungskopf in bezug auf die Scheibenspur anordnet, und eine programmierbare Steuereinrichtung beinhaltet, die dergestalt programmiert ist, daß sie die Steuersignale gemäß dem in einem der vorhergehenden Ansprüche definierten Verfahren bestimmt und erzeugt, und diese an die Betätigungselement-Steuerung anlegt, um eine Spur-Suchbewegung des Betätigungselements zu bewirken.

6. Scheibenantriebssystem-Steuerung mit einem Mikrocontroller, einer Datenaufzeichungs/Reproduktionsvorrichtung mit einem Sensor zum Aufzeichnen und Reproduzieren von Daten auf und von einer Scheibe; einem Betätigungselement; wobei der Mikrocontroller so ausgebildet ist, daß er das Betätigungselement steuert; und einem Speicher, der ein Steuerprogramm beinhaltet, welches Kopf-Positionier-Steuervorgänge beinhaltet, die von dem Mikrocontroller ausgeführt werden, wobei das Steuerprogramm Steuerprozesse beinhaltet, um zu bewirken, daß das Betätigungselement einen Spursuch-Betrieb und Spur-Folge-Betrieb unternimmt, wobei die Steuerung dadurch gekennzeichnet ist, daß der Spursuch-Betrieb gemäß dem folgenden ausgeführt wird:
a) in einem Beschleunigungsabschnitt$\begin{matrix}\begin{matrix}{\text{U = V}}_{\text{error}} {\text{+ I}}_{\text{pes}} \\ {\text{(V}}_{\text{actual}} {\text{/K}}_{\text{switching}} {\text{< V}}_{\text{error}} \text{)}\end{matrix}\end{matrix}$
b) in einem Verzögerungsabschnitt${\text{U = f(V}}_{\text{error}} {\text{, V}}_{\text{error}} {\text{') - V}}_{\text{actual}} {\text{+ K}}_{\text{decel}}$ 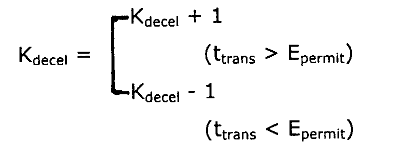
c) wobei der Spur-Folge-Betrieb ausgeführt wird gemäß:$\begin{matrix}\begin{matrix}{\text{U = K}}_{\text{p}} {\text{.PES}}_{\text{n}} {\text{+ K}}_{\text{D}} {\text{. (PES}}_{\text{n-1}} {\text{- PES}}_{\text{n}} {\text{) + I}}_{\text{pes}} \\ {\text{(P}}_{\text{error}} {\text{< K}}_{\text{following}} \text{)}\end{matrix}\end{matrix}$ wobei Vₑᵣᵣₒᵣ: ein Geschwindigkeitsfehler des Kopfes, Vₑᵣᵣₒᵣ' ein abgeleiteter Wert eines Geschwindigkeitsfehlers, V_{prof}: eine Kopfgeschwindigkeit bei einer gegebenen momentanen Spur, V_{actual}: eine Kopfgeschwindigkeit, bei welcher eine Berechnungszeitverzögerung kompensiert wird, PESₙ ein Positionsfehlersignal, welches den Nicht-auf-der-Spur-Fehler eines Kopfes von einer Spur bezeichnet, Iₚₑₛ: einen Integralwert von PESₙ, K_{switching}: eine Beschleunigungs/Verzögerungs-Kommutationskonstante, F(Vₑᵣᵣₒᵣ, Vₑᵣᵣₒᵣ') eine Fuzzy-Funktion, K_{P}: eine proportionale Verstärkungskonstante, K_{D}: eine abgeleitete Verstärkungskonstante, Pₑᵣᵣₒᵣ: die Anzahl an zu durchlaufenden Spuren, K_{following}: eine Kommutationskonstante von einem Spursuchbetrieb zu einem Spur-Folgebetrieb, V_{cal}: eine Kopfgeschwindigkeit, berechnet durch einen Unterschied zwischen der Anzahl der momentan zu durchlaufenden Spuren und der Anzahl der Spuren, die bei einer vorherigen Probezeit durchlaufen worden sein müßten, V_{pred}: eine vorausgesagte Geschwindigkeit einer nächsten Probezeit, K_{pred}: eine Konstante, erhalten von einem Versuch-und-Irrtum-Verfahren, K_{decel}: eine Kompensationskonstante, tₜᵣₐₙₛ: eine Übergangs-Reaktionszeit, Eₚₑᵣₘᵢₜ: eine vorbestimmte Übergangs-Reaktionszeit.

7. Scheibenlaufwerksystem-Steuerung nach Anspruch 6, wobei die Daten aufzeichnende/reproduzierende Vorrichtung eine Betätigungsanordnung ist, welche aus einem Betätigungselement, einem Arm und einem Kopf gebildet ist.

8. Scheibenlaufwerksystem-Steuerung nach Anspruch 6, wobei die Daten aufzeichnende/reproduzierende Vorrichtung ein Geber mit mindestens einer Bewegungseinheit und mindestens einem optischen Sensor ist.

## Revendications

1. Un procédé de commande d'un actionneur d'un appareil d'entraînement de disque, dans lequel, en réponse à des signaux de commande, un contrôleur d'actionneur est agencé pour déplacer ledit actionneur pour rechercher une piste de disque sélectionnée et pour positionner une tête d'actionneur de celui-ci par rapport à ladite piste de disque sélectionné, et dans lequel ledit contrôleur est agencé pour accélérer puis décélérer ledit actionneur, le procédé étant caractérisé en ce que, durant la décélération dudit actionneur ledit procédé comprend les étapes consistant à déterminer les signaux de commande appliqués au dit contrôleur d'actionneur durant la décélération, de manière que ledit actionneur suive pratiquement un profil de vitesse souhaité, et en ce que lesdits signaux de commande soient déterminés en fonction d'une constante de décélération prédéterminée, de la vitesse réelle de l'actionneur, et une valeur déterminée par des règles floues en fonction de la différence existant entre la vitesse souhaitée du profil et la vitesse réelle de l'actionneur, les règles floues n'étant pas appliquées pendant l'accélération.

2. Un procédé selon la revendication 1, dans lequel une table de consultation, construite selon des règles floues, est prévue et ladite valeur déterminée par des règles floues est déterminée par introduction de ladite différence existant entre les valeurs souhaitées et réelles et la dérivée desdites différences, dans ladite table de consultation.

3. Un procédé selon la revendication 1 ou la revendication 2, dans lequel ladite constante de décélération prédéterminée est sélectionnée en fonction du nombre de pistes à faire franchir par ledit actionneur.

4. Un procédé selon l'une quelconque des revendications précédentes, comprenant en outre l'étape consistant à provoquer une commutation dudit contrôleur, de l'accélération à la décelération de l'actionneur, s'il est déterminé que la différence entre la vitesse souhaitée du profil et la vitesse réelle de l'actionneur est sensiblement égale à la valeur de la vitesse réelle, divisée par une constante de commutation prédéterminée.

5. Appareil de commande d'un actionneur d'entraînement de disque, utilisant le procédé de commande selon l'une quelconque des revendications précédentes, ledit appareil comprenant un contrôleur d'actionneur agencé pour déplacer ledit actionneur afin de rechercher une piste de disque sélectionnée et pour positionner une tête d'actionneur de celui-ci par rapport à ladite piste de disque, et des moyens de commande programmables, qui sont programmés pour déterminer et générer les signaux de commande selon le procédé tel que défini dans l'une quelconque des revendications précédentes, et pour les appliquer au dit contrôleur d'actionneur pour provoquer le déplacement de recherche de piste de la part dudit actionneur.

6. Un contrôleur de système d'entraînement de disque comprenant un micro-contrôleur; un appareil d'enregistrement-reproduction de données ayant un capteur destiné à enregistrer et reproduire des données, sur et depuis un disque; un actionneur; le micro-contrôleur étant agencé pour commander l'actionneur, et une mémoire contenant un programme de commande incluant des processus de commande de positionnement de tête exécutés par le micro-contrôleur; dans lequel ledit programme de commande incorpore des processus de commande pour provoquer l'exécution par l'actionneur d'une opération de recherche de piste et une opération de suivi de piste, le contrôleur étant caractérisé en ce que ladite opération de recherche de piste est exécutée selon :
a) dans la partie accélération,$\begin{matrix}\begin{matrix}{\text{U = V}}_{\text{erreur}} {\text{+ I}}_{\text{pes}} \\ {\text{(V}}_{\text{reel}} {\text{/K}}_{\text{commutation}} {\text{< V}}_{\text{erreur}} \text{)}\end{matrix}\end{matrix}$
b) dans la partie de décélération,${\text{U = f(V}}_{\text{erreur}} {\text{, V}}_{\text{erreur}} {\text{') - V}}_{\text{actuel}} {\text{+K}}_{\text{décel}}$ 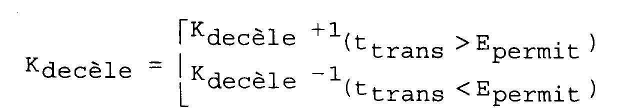
c) ladite opération de suivi de piste est exécutée selon :$\begin{matrix}\begin{matrix}{\text{U = K}}_{\text{p}} {\text{. PES}}_{\text{a}} {\text{+K}}_{\text{D}} {\text{. (PES}}_{\text{a-1}} {\text{-PES}}_{\text{a}} {\text{)+I}}_{\text{pes}} \\ {\text{(P}}_{\text{erreur}} {\text{< K}}_{\text{suivant}} \text{)}\end{matrix}\end{matrix}$ dans lesquelles :
Vₑᵣᵣₑᵤᵣ : erreur de vitesse de la tête, Vₑᵣᵣₒᵣ' : est la dérivée de l'erreur de vitesse, V_{prof} : vitesse de la tête sur une piste actuelle donnée, Vᵣₑₑₗ : vitesse de tête avec un retard de temps de calcul qui est compensé, PESₐ: signal d'erreur de position notifiant l'erreur de désaxement de piste d'une tête par rapport à une piste, Iₚₑₛ : valeur intégrale de PESₐ, K_{commutation} : constante de commutation accélération/décélération, F(Vₑᵣᵣₑᵤᵣ, Vₑᵣᵣₑᵤᵣ') : fonction floue, K_{P} : constante de gain proportionnel, K_{D} : constante de gain dérivée; Pₑᵣᵣₑᵤᵣ : nombre de pistes à franchir, Kₛᵤᵢᵥᵢ : constante de commutation entre une opération de recherche de piste et une opération de suivi de piste, V_{cal} : vitesse de tête calculée par la différence entre le nombres des pistes à franchir au moment précis et le nombre des pistes ayant été franchi à un moment d'échantillonnage antérieur, V_{pred} : vitesse prédite d'un nouveau temps d'échantillonnage, K_{pred} constante obtenue à partir d'un procédé à recherche et erreur, K_{décèle} constante de compensation, Tₜᵣₐₙₛ : temps de réponse transitoire, Eₚₑᵣₘᵢₜ: temps de réponse transitoire prédéterminé.

7. Un contrôleur de système d'entraînement de disque selon la revendication 6, dans lequel ledit appareil d'enregistrement/reproduction de données est un ensemble actionneur constitué d'un actionneur, d'un bras et d'une tête.

8. Contrôleur de système d'entraînement de disque selon la revendication 6, dans lequel ledit appareil d'enregistrement/reproduction de données est un appareil capteur, ayant au moins une unité mobile et au moins un capteur optique.
